# EUROPEAN PATENT APPLICATION

(11) **EP 2 832 642 A1**
(43) Date of publication of application: **04.02.2015**
(21) Application number: 13178698.0
(22) Date of filing: 31.07.2013
(51) Int. Cl.: B64D 11/00

(54) **Storage device comprising a luggage bin and an emergency oxygen unit**

(71) Applicant: Zodiac Aerotechnics, 78370 Plaisir (FR)
(72) Inventor: Rittner, Wolfgang, 23623 Ahrensbök (DE); Hollm, Marco, 25548 Rosdorf (DE); Damlo, Craig, 23617 Stockelsdorf (DE); Jackson, Scott, 23617 Stockelsdorf (DE); Bandinelli, Matt, 23617 Stockelsdorf (DE)
(74) Representative: Eisenführ Speiser

(57) **Abstract**

The invention relates to a storage device system (100) adapted for integration into the ceiling part of a passenger cabin (1000) of an aircraft, comprising:
- a stowage housing (10) of a stowage bin and an external housing part (20), wherein the stowage housing is adapted to provide a lower position and an upper position, and the stowage housing is mounted pivotal relative to the external housing part.

According to the invention a space between the stowage housing and the external housing part, is defined as an application-space (40), wherein an emergency oxygen unit (30) for at least on passenger is placed in the application-space.

## Description

The invention relates to a storage device system adapted for integration into the ceiling part of a passenger cabin of an aircraft according to the preamble part of claim 1. Further the invention relates to a passenger service unit, in particular for a fuselage of an aircraft comprising a passenger cabin, comprising a storage device system. The invention also regards a fuselage of an aircraft comprising a passenger cabin and associated therewith a number of passenger service unit.

A cabin is a section of an aircraft wherein, in a commercial aircraft, a travel class section can be provided. Seats of the passengers are normally arranged in rows and alleys where a row usually is aligned crosswise to an alley of seats; a row may have two, three, four, five or more seats depending on the size and the sections of an aircraft.

In the aircraft interior typically various modules are equipped, which can be integrated in the ceiling part of cabin of an aircraft. A known passenger service unit (PSU) e.g. comprises modules for providing support and service to the passenger like a cabin air distribution, a reading light, a button e.g. for an attendant call or the like, a gasper air device; but also a safety unit and equipment usually is provided in a PSU, in particular an emergency oxygen unit.

These and other modules in general should be designed with regard to space saving requirements, in particular such that passengers have an increased amount of space to move inside the cabin, e.g. at a head's side. Nevertheless an increased amount of service features will be offered in the future to increase the comfort of a passenger, so that the functionality and the serviceability of at least some of the units, modules and systems should be increased even though the size thereof should be decreased or are optimized otherwise.

In this regard the overhead stowage compartments, as being integrated in or at the ceiling, are redesigned on the one hand for providing more head's room for the passenger on the other hand for giving a larger capacity stowage bin or compartment for an increased lead bearing capacity still allowing easy handling. It is known in the art to provide next to the shelf or fixed overhead stowage bins or to install pivot overhead stowage bins in the fuselage of an aircraft.

Thus, by changing the design of the stowage bin, new solutions have to be created for other aircraft interior equipment like the passenger service unit. Because of the limited amount of space a new solution can result in the placing of a service module in a sidewall of a cabin e.g..

In WO2012/040489 A1 an integrated aircraft interior module is disclosed which is suitable for an installation to an existing aircraft structural support and which is suitable for retrofitting of commercial aircraft interiors. In this disclosure it is described that one ore more personal units are preferably mounted beneath one or both of the right and left overhead stowage bins or compartments.

In US 2009/0121080 A1 a luggage compartment is described comprising a tilting floor, a flap and a suspension device.

Nevertheless, a passenger service unit then might also suffer from a significant change in the reachability or serviceability for each passenger depending on its seat position, in the case of the above mentioned solutions.

The redesign of the storage bins leads to an integral design of the cabin interior. Still, this kind of redesign may include a rearrangement of a service module and a combined functional unit for continuously providing the best comfort to the passenger.

This is where the invention comes in, wherein a major object of the invention is to provide an improved storage device system adapted to be integrated into the ceiling part of a passenger cabin of an aircraft. Further, a respectively improved Passenger Service Unit (PSU) comprising a storage device system shall be provided in a fuselage of an aircraft. In particular, in cooperation to the redesign of the interior of a cabin, an improved arrangement should be improved with regard to an increase of service aspects of the passenger. It is a further object of the invention to provide an improved equipment which is part of safety aspects for at least one passenger. It is still a further object to provide a superior utilization of the room in the bottom area.

In relation to the storage device system the object of the invention is achieved by the storage device system of claim 1; i.e. as mentioned in the introduction and according to the invention further providing the features of the characterizing part of claim 1.

The invention relates to a storage device system adapted for integration into the ceiling part of a passenger cabin of an aircraft, comprising: - a stowage housing of a stowage bin and an external housing part, wherein the stowage housing is adapted to provide a lower position and an upper position, and the stowage housing is mounted pivotal relative to the external housing part. According to the invention a space between the stowage housing and the external housing part, is defined as an application-space, wherein an emergency oxygen unit for at least on passenger is placed in the application-space.

The invention also leads to a passenger service unit (PSU) of claim 16. A passenger service unit according to the invention is associated with the storage device system according to the invention wherein a system of an emergency oxygen unit and another unit of the passenger service unit is provided and the, in particular adapted, emergency oxygen unit is separated from the another unit of the passenger service unit (PSU). In particular wherein the PSU comprises a reading light, a gasper air device, buttons or the like another unit, the same can be separated from the adapted emergency oxygen unit. This leads to a disjuncture of safety aspects and comfort aspects but leads also to an assess of the importance of the reachability for an oxygen mask.

A fuselage of an aircraft of claim 17 according to the invention comprises a passenger cabin and associated therewith is a number of storage device systems, so that all passenger cabins get the same redesign and the same safety aspects.

The invention basically provides an arrangement based on a storage device system wherein the adapted emergency oxygen unit can be placed in an external housing part using the defined application-space between the stowage housing and the external housing part.

The invention recognized that it is desirable to redesign the ceiling part of a cabin of an aircraft for achieving improved comfort and service for the passenger. The inventive concept of a storage device system starts from the consideration that a pivotal mounted stowage housing requires tilting room, which typically would be lost space. The invention recognized that a use of the disregarded tilting room is possible. In the opposite to the aforementioned state of the art the space will be not used by an existing solution; instead the solution provides a new design especially designed for the pivotal mounting for an optimized fitting.

A benefit issues for fitting or adapting are safety issues, although they have various requirements. This also applies for the emergency oxygen unit, which preferably is adapted to several requirements. Further the invention recognized that an emergency oxygen unit comprises an oxygen source; like e.g. a chemical oxygen generator or a pressure tank comprising pressurized oxygen, a control unit for controlling the pressure of the oxygen supplied to a person using the system and a supply line like a tubing set directing the oxygen from the oxygen source to an oxygen mask. This oxygen mask is adapted to cover both mouth and nose of person using the system. Important requirements e.g. are a functionality of all parts, a possibility of maintenance and reliability and the reachability of the mask in case of an emergency. The invention recognized that an overhead stowage for higher lead bearing capacity needs more space combined with installed transfer system for the easier handling of the luggage. This includes the loading from the gangway and leads to the shift of other service units. Service and safety units of the PSU will be installed next to sidewall with influence on the reachability especially for the seat next to the gangway.

A drawback can be compensated with the inventive storage device system. An enhancement of the stowage bin is still possible, also for the higher lead bearing capacity and easier handling but without loosing of necessary space for safety units. The new storage device includes features of easier handling of a stowage bin which is described in the preamble part of claim 1; i.e. in an adapted form which is adapted to the application-space by providing an upper and lower position as claimed. When in the lower position, a stowage housing can offer the opportunity for an easy operating of loading and unloading. When in the upper position, a stowage housing can enable a bigger headroom area and an easier moving of the passengers. Also a flight attendant button in between of the seats and seat rows can be provided.

For moving in the upper and lower position the stowage housing of a stowage bin is mounted pivotal to the external housing part. The pivotal mounting is not restricted to be provided with a fixing element und in the invention there is no limitation about the pivot mounting. Between the stowage housing and the external housing part a space is provided which according to the invention is recognized to be usable as an application-space, wherein an emergency oxygen unit for at least on passenger is placed in the application-space. The place thus can be used for an extended functionality than only providing space for a channel of wires. In a preferred development by adapting the emergency oxygen unit to the application-space a particular improvement to the interior of the cabin can be achieved.

An improved solution for handling and using can be chosen because of the functional application of the arising space. The use of the arising space as an application-space, i.e. by placing the emergency oxygen unit therein is recognized by the concept of the invention. In particular the emergency oxygen unit will be adapted such that the functionality will be preserved by optimizing size and packaging of this unit. The adapted emergency oxygen unit can change the form and position by changing in the upper and lower position without changing or loosing its functionality.

All requirements like maintenance and reliability for the emergency oxygen unit should be possible to achieve. Beyond that the inventive concept provides the oxygen mask as close as possible to the passenger seats. While in other redesigns the masks can move laterally together with the PSU, e.g. the oxygen masks will be close to the whole passenger seats, so the reachability in an emergency case will be achieved very easy by the inventive storage device system.

These and further developed configurations are further outlined in dependent claims. The mentioned advantages of the proposed concept are even more improved. For each feature of the dependent claims it is claimed independent protection independent from all other features of this disclosure.

In a preferred development it has been recognized to be convenient that the rotatable tilting line of the stowage housing between the lower position and the upper position specifies at least dimension of the external housing part. This configuration observes the requirements to the optimal aircraft interior with reduced sizes. In this context the external housing part is specified in at least one dimension for reducing the required installation area. The emergency oxygen unit is adapted for utilizing the defined application-space.

In a further preferred development the rotatable tilting line of the stowage housing between the lower position and the upper position specifies the application-space in the external housing part. This development includes advantageously integrating by reducing the necessary application-space of the storage device system. In particular a pivotal mounting will influence the dimension of the external housing part by resulting in a rotatable tilting line. This defining prevents lost space by redesigning a new stowage bin.

A beneficial developed configuration is the use of the application-space between a sidewall assigned to at least one dimension of the external housing part and the stowage housing for an adapted emergency oxygen unit. In this case the adapting should being optimized on the application-space and the rotatable moving of the stowage housing and the external housing part. A flexible configuration offers the possibility to adapt the emergency oxygen unit without pinches or defects. It allows a combination of comfort and safety aspects in an optimized position of the unit without restricting functionality or safety demands.

The adapted emergency oxygen unit comprises at least one mask and/or at least one element selected from the group consisting of: oxygen bin, generator and gaseous cylinder. All listed parts together with the tubing set, are useful to provide oxygen in an emergency case. Depending on the application-space an optimized position can be chosen for an installed solution.

For safety related aspects e.g. the mask is important to be reached by each passenger independent of the seat position. With regard to the application-space used, the mask is an important part of the unit. Further the oxygen bin and/or generator and/or gaseous cylinder and/or an activation and control system can be integrated in this application-space depending on space and size of the parts of the emergency oxygen unit or in another region

The external housing part is preferably adapted for guiding and holding the stowage housing, in particular the part is adapted relative to the external housing part because of the pivotal mounting of the stowage house. For generating the upper and the lower position a construction is preferred wherein two parts enable a functional position change without changing the installed room and without changing the durability of the devices or configurations. For movable parts preferably one installed part, which is fixed, guides the other part, which is movable, to achieve a system of optimized stability.

For design aspects and the warranty, for a particular purpose, a preferred development includes a closing device which is adapted for the adapted emergency oxygen unit, in particular having an automatically opening in case of an activation of the oxygen system for providing a pull flag and/or a mask. The closing device can be integrated in the typical overhead panel without any visible difference. Only for the emergency case the closing device will open and enables use of the adapted emergency oxygen unit. This fulfills also the safety requirements that the oxygen masks will not be used without any reason.

A closing is advantageously kept to the functionality and to prevent the passenger for an accident while changing from one position in the other. Preferably, in particular in an emergency case, to achieve an improved support the closing device can be provided along a longitudinal axis of the cabin with a synchronously opening for each seat row.

In a preferred development an element selected from the group consisting of: oxygen bin, generator and gaseous cylinder, is separated from the, in particular adapted, emergency oxygen unit.

In particular with regard to a maintenance purpose certain places in the application space are preferred due to easier handling and chancing. The supply of oxygen is guaranteed by the tubing set so that the storage of the element can be separated. This leads to another development wherein a part of the adapted emergency oxygen unit is placed in a corner of the stowage housing. This can be the oxygen bin or the generator or the gaseous cylinder. A the mask with the tubing set should be close to passenger seat. The supply units can be stored in other places. The corner of the stowage housing offers a good opportunity without long pipes for the oxygen transportation.

While storing the element separately, the ,in particular adapted, emergency oxygen unit comprises the ask in a double tear bag. In this development the advantages of an easy handling, a flexible system itself and an adaptable unit provide a possibility for realizing of the adaptable emergency oxygen unit and preferably using limited space. E.g. an adapted emergency oxygen unit canbe placed without fixed installation.

In a preferred development an adapted emergency oxygen unit for at least on passenger is placed in a storage box or storage well, the storage box or well forming an additional part of the stowage housing and wherein the dimensions of the storage box correlate at least partly with a rotatable tilting line. The box or well is preferably part of the stowage housing and adapts a special storage room for the adapted emergency oxygen unit without increasing the needed place.

Preferably the storage box fits perfectly in the application-space which is needed for tilting the stowage housing and will be tilted together with the stowage housing. A remaining application-space between the external housing part and the stowage housing with the additional storage box would only be a small application-space gap between external housing and stowage housing with the additional storage box. This allows having a rotatable tilting possibility without increasing a space needed.

The storage box offers the opportunity to rotate without getting in trouble with tubing sets while tilting. The box also adapts a surface for integrating the closing device so that the closing device will be movable together with the stowage box and therefore with he stowage housing.

Wires and pipes tend to disarrange so that the adapted emergency oxygen unit will be fixed by at least one hook. This guarantees the whole functionality also while rotatable tilting in an emergency case. In a particular preferred development the hook is arranged on a rail system on the sidewall of the stowage housing for sliding the hook individually to the installed seat combination of the aircraft. This development allows the change of the seat number in a seat row by change of travel class section.

For improving a degree of freedom for operating the adapted emergency oxygen unit it can be placed without fixed installation, so that the installation can be flexible and individual depending on each position which is required to install.

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. Further the features described in the description, the drawing and the claims disclosing the invention may be essential for the invention considered alone or in combination. In particular, any reference signs in the claims shall not be construed as limiting the scope of the invention. The wording "comprising" does not exclude other elements or steps. The wording "a" or "an" does not exclude a plurality. The wording, "a number of" items, comprises also the number one, i.e. a single item, and further numbers like two, three, four and so forth. The drawing shows in:
Fig. 1: a first embodiment as a simplified cross section of the ceiling part of seat row in a passenger cabin of an aircraft;
Fig.2: a second embodiment as a simplified scheme of the storage device system arranged in a ceiling part of seat row;
Fig.3: a third embodiment as a simplified scheme of the adapted emergency oxygen unit of a storage device system;
Fig.4: a fourth embodiment as a simplified scheme of a pull drop case of the emergency oxygen system;
Fig.5: a fifth embodiment a simplified scheme of a preferred embodiment of the storage device system.

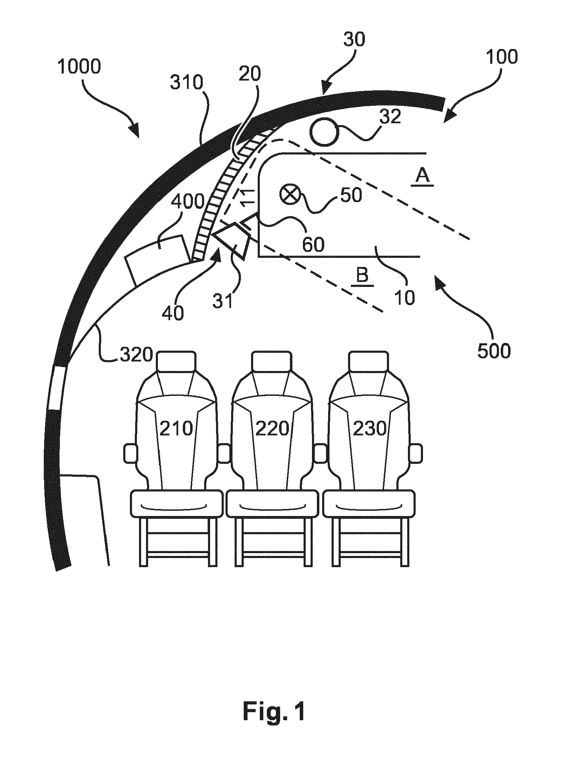

Fig. 1 shows in a schematic view a storage device system 100 integrated in the ceiling part 500 of a passenger cabin 1000. Above the passenger seats 210, 220 and 230 functional devices are installed in the space between the outer skin 310 und the inner skin 320. Functional devices are par example a passenger service unit (PSU) 400 or a storage device system 100, also known as the luggage compartment. The luggage compartment in this embodiment following the inventive concept is formed as a storage device system 100 comprising in this embodiment a stowage housing 10 and an external housing part 20. The stowage housing is mounted pivotal by a pivot point 50, and thus can be shifted in two different positions. In a position (A) the stowage housing 10 is in an upper position and in position (B) the stowage housing 10 is in a lower position. The continuous line of position (A) refers to the existing position in this Fig. 1; the dashed line demonstrates the necessary space for shifting the stowage housing 10 to the possible end position of position (B). Between the stowage housing 10 and the external housing part according to the inventive concept thus there is a defined the space as an application-space 40 for further use because of the rotating kind of shifting --further also referred to as tilting-- of the stowage housing 10 wherein an adaptable emergency oxygen unit 30 can be placed in.

In this embodiment the emergency oxygen unit 30 is illustrated with a mask 31 and oxygen bin (generator, gaseous cylinder) 32 stored in the application-space 40 wherein the mask is hold by a hook 60. By tilting the stowage housing 10 from the position (A) into position (B) the mask 31 is flexible designed and will be adapted by the position of the housing without being damaged. The concept enables a redesign of the luggage compartment with a higher comfort for luggage handling and integrated safety aspect with a high functionally of using empty space as an application-space by constructive elements. The place of the oxygen mask is close to the passenger seats 210, 220 and 230 and reachable for all passengers sitting in a row. As depicted the PSU 400 with integrated elements like reading light, ventilations, attendant call buttons or loudspeakers is shifted to the sidewall of the passenger's row; this will be achievable by further design developments for having the same comfort. In relation to the PSU, the masks of the emergency oxygen unit, nevertheless, drop down close to the passenger seats and are easily reachable for each passenger.

For identical or equivalent items or items of identical or equivalent function in the following the same reference marks are used. For corresponding features thus it is referred to the above description.

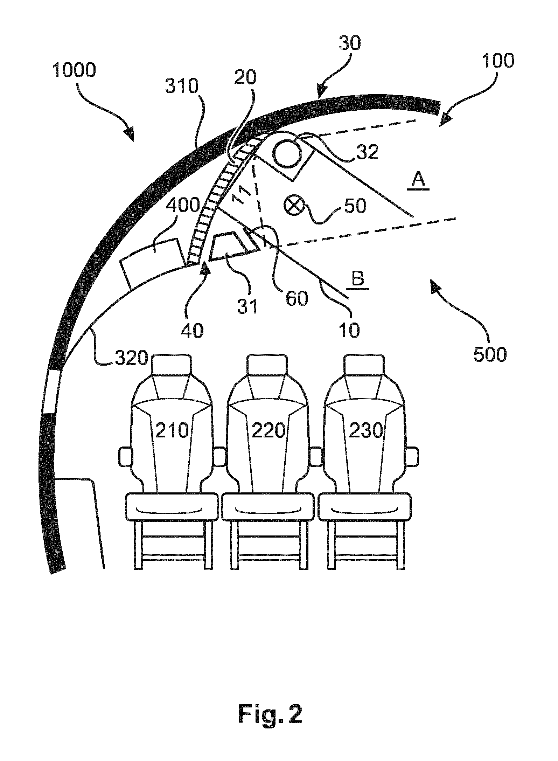

Fig.2 shows the storage device system as depicted in Fig.1, but in Fig.2 with the difference that the oxygen bin (generator, gaseous cylinder) 32 of the emergency oxygen unit 30 is placed in the corner 12 of the stowage housing 10 as a constructive possibility. If the application-space 40 is very small --par example because of the only slight different rotatable tilting positions around the pivot point 50 of the storage device system-- parts of the emergency oxygen unit 30 like the oxygen bin 32 unit can be separated in the corner 12 of the stowage housing. The corner of the stowage housing of a stowage bin are mostly not loaded with luggage and offers unused application-space, which can be utilized for the storage device system which increases the compact design of the ceiling area. The application-space 40 can be defined between the barrier 21 of the external housing parts 20 and the sidewall 11 of the stowage housing in this embodiment visible as the backside of the stowage housing 10.

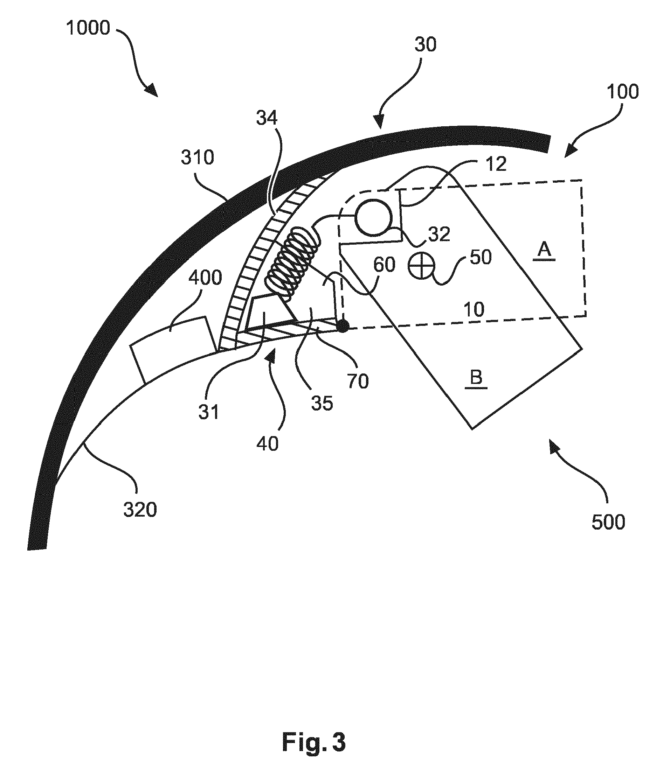

In Fig.3 the ceiling part and the stowage device system 100 of a passengers cabin 1000 is shown, wherein the emergency oxygen unit 30 is placed in the application-space 40 between the stowage housing 10 and the external housing part 20. The stowage housing is drawn in the lower position (B) rotatable tilted by the pivot point 50 for loading the luggage. The emergency oxygen unit 30 is divided in the oxygen bin (generator, gaseous cylinder) 32 and the oxygen source installed in the corner 12 of the stowage housing and the double tear bag 35 fixed by a hook 60. The hook 60 can be fixed or arranged on a rail system for sliding the hook individually to the installed seat combination for each flight.

The double tear bag is a bag wherein an excess tubing section is stored in a permanent connection of an oxygen mask 31. The excess tubing section 34 serves to bridge the main part of distance between the oxygen source and the passenger or mask 31. The lower position does not affect the double tear bag and its functionality. The bag is flexible and assimilates to each position the stowage housing moved in. The stowage housing is guided and is hold by the external housing part 20. In Fig.3 a closing device 70 separates the application-space 40 from the passenger cabin and avoids the double tear bag falling down in unplanned situations.

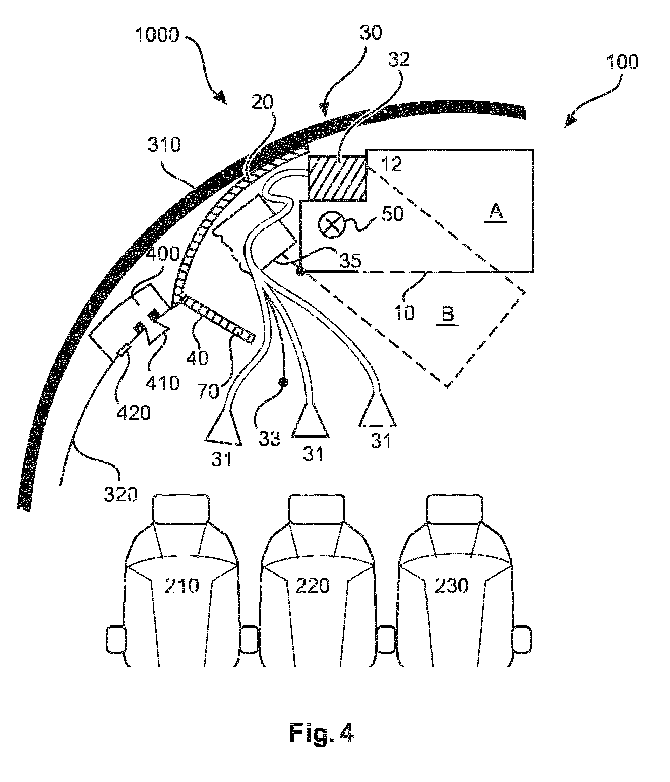

Fig.4 shows a part of a passenger cabin wherein in the ceiling of the passenger cabin 1000 a PSU 400 is integrated wherein the adapted storage device system 100 is separated from other units of the PSU like reading light 410 or an attendant call button 420. These units together with the storage device system are placed between the outer skin 310 and inner skin 320. The separation of the PSU offers the opportunity to use arising space because of constructive design solutions as an application-space 40. The application-space 40 can be built between the stowage housing 10 and the external housing part 20. In this application-space 40 a double tear bag 35 is integrated. As shown in Fig.3 the stowage housing is tilted in the position (A), the closing device 70 is opened because of an automatically opening. After having opened the closing device the pull flag 33 comes out and by pulling the two masks 31 with the extended tubing, they drop out very close to the passenger seats 210, 220 and 230; the pulling snapped the bag visible by the ripped line. By dropping out of the bag the tubing set 34 untangles itself and now can be connected to the passenger by means of the mask 31 with the oxygen source. The oxygen source --a oxygen bin/ generator or gaseous cylinder 32-- is separated in the corner 12 of the stowage housing 10.

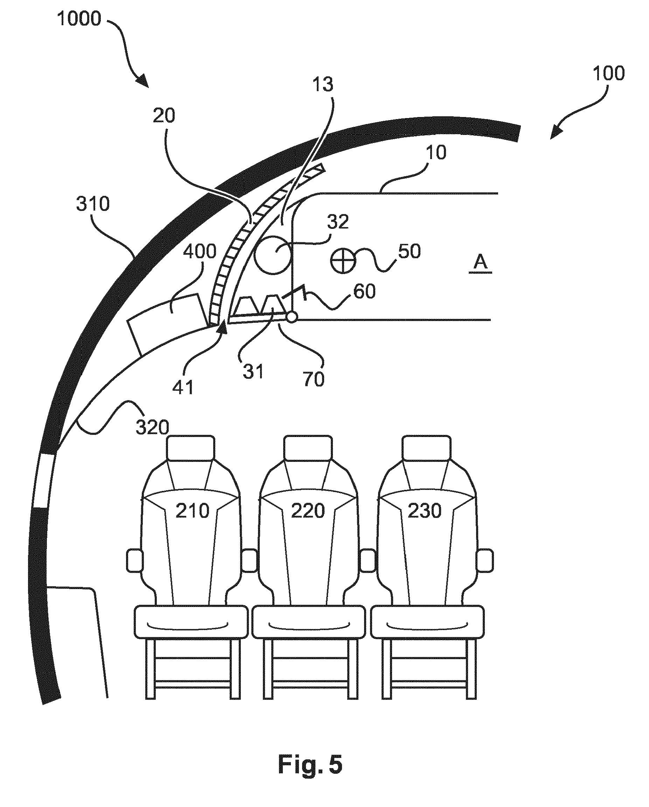

Fig.5 shows a preferred embodiment of the storage device system 100, which is integrated in the ceiling of the passenger cabin 1000, wherein a PSU 400 is integrated and wherein an adapted storage device system 100 is separated from other units of the PSU 400. These units together with the storage device system are placed between the outer skin 310 and inner skin 320. The stowage device system 100 comprises in this preferred embodiment a stowage housing 10 and an external housing part 20. The stowage housing is mounted pivotal by a pivot point 50, which can be shifted in two different positions; here position (A) is depicted as the upper position. The stowage housing 10 includes a separated storage box 13 which enlarges the housing. The dimensions of the separated storage box are in accordance with the rotatable tilting lines leaving only a small application-space gap 41 between the external housing and the stowage housing 10 with box 13. In an adapted embodiment the box can also be replaced by a well, i.e. without a closing device 70 formed on the well.

The pivot point 50 in this embodiment forms a pivot point for the whole stowage, i.e. the stowage housing 10 and the storage box 13. In this preferred embodiment the emergency oxygen unit 30 is illustrated with a mask 31 and an oxygen bin (generator, gaseous cylinder) 32 stored in the storage box 13 wherein the mask is hold by hook 60. By tilting the stowage housing 10 the adapted emergency oxygen unit 30 will be also be tilted without being damaged. The concept enables a redesign of the luggage compartment with a higher comfort for luggage handling and integrated safety aspect with a high functionally of using empty space as an application-space by constructive elements. The place of the oxygen mask is close to the passenger seats 210, 220 and 230 and the masks are reachable for all passengers sitting in a row when dropping down. The additional closing device 70 of the box 13 separates the emergency oxygen unit 30 in the storage box 13. In case of an emergency the closing device 70 can open and the masks can drop out. As depicted, the PSU 400 with integrated elements like reading light, ventilations, attendant call button or loudspeakers is shifted to the sidewall of the passenger's row which will be able to be managed by further design developments for having the same comfort. In relation to the PSU the masks of the emergency oxygen unit drop down close to the passenger seats and can be easily reached by a passenger.

### List of references

- 1000: passenger cabin
- 100: storage device system
- 10: stowage housing
- 11: sidewall
- 12: corner
- 13: storage box
- 20: external housing part
- 21: barrier
- 30: emergency oxygen unit
- 31: mask
- 32: oxygen bin
- 33: pull flag
- 34: tubing set
- 35: double tear bag
- 40: application-space
- 41: application-space gap
- 50: pivot point
- 60: hook
- 70: closing device
- 210, 220, 230: passenger seat
- 310: outer skin
- 320: inner skin
- 400: PSU
- 410: reading light
- 420: attendant call bottom
- 500: ceiling part

## Claims

1. A storage device system adapted for integration into the ceiling part of a passenger cabin of an aircraft, comprising:
- a stowage housing of a stowage bin and an external housing part, wherein the stowage housing is adapted to provide a lower position and an upper position, and the stowage housing is mounted pivotal relative to the external housing part,
**characterized in that**
- a space between the stowage housing and the external housing part is defined as an application-space, wherein
- an emergency oxygen unit for at least on passenger is placed in the application-space.

2. A storage device system according to claim 1, wherein the emergency oxygen unit is in an adapted form which is adapted to the application-space.

3. A storage device system according to claim 1 or 2, wherein a rotatable tilting line of the stowage housing between the lower position and the upper position specifies at least one dimension of the external housing part.

4. A storage device system according to one of the claims 1 to 3, wherein a rotatable tilting line of the stowage housing, when tilted between the lower position and the upper position, specifies at least partly the application-space in the external housing part

5. A storage device system according to one of the claims 1 to 4, wherein the adapted emergency oxygen unit is placed in the application-space between a sidewall assigned to at least one dimension of the external housing part and the stowage housing.

6. A storage device system according to one of the claims 1 to 5, wherein the adapted emergency oxygen unit comprises at least one mask and/or at least one element selected from the group consisting of: oxygen bin, generator, gaseous cylinder.

7. A storage device system according to one of the claims 1 to 6, wherein the external housing part is adapted for guiding and holding the stowage housing.

8. A storage device system according to one of the claims 1 to 7, wherein a closing device is adapted for the adapted emergency oxygen unit, the closing device having an automatically opening in case of an activation of the oxygen system for providing to a pull flag and/or a mask.

9. A storage device system according to one of the claims 1 to 8, wherein the closing device is provided along a longitudinal axis of the cabin with a synchronously opening for each seat row.

10. A storage device system according to one of the claims 1 to 9 wherein the element selected from the group consisting of: oxygen bin, generator, gaseous cylinder, is separated from the, in particular adapted, emergency oxygen unit.

11. A storage device system according to one of the claims 1 to 10 wherein a part of the, in particular adapted, emergency oxygen unit is placed in a corner of the stowage housing.

12. A storage device system according to one of the claims 1 to 11 wherein the adapted emergency oxygen unit is provided in a double tear bag.

13. A storage device system according to one of the claims 1 to 12 wherein adapted emergency oxygen unit is placed without fixed installation and/or a comparing small space gap is provided between the external housing part and the stowage housing with the additional storage box.

14. A storage device system according to one of the claims 1 to 13 wherein the, in particular adapted, emergency oxygen unit for the at least one passenger is placed in a storage box or storage well, the storage box or well forming an additional part of the stowage housing and wherein the dimensions of the storage box correlate at least partly with a rotatable tilting line.

15. A storage device system according to one of the claims 1 to 14 wherein the, in a particular adapted, emergency oxygen unit is held by at least one hook, wherein preferably the hook is arranged on a rail system on the sidewall of the stowage housing for sliding the hook individually to the installed seat combination of the aircraft.

16. Passenger Service Unit, in particular for a fuselage of an aircraft comprising a passenger cabin, associated therewith the storage device system according to one of the claims 1 to 15, wherein a system of an emergency oxygen unit and another unit of the passenger service unit is provided and the emergency oxygen unit is separated from the another unit of the passenger service unit (PSU), in particular wherein the another unit of the passenger service unit is selected from the group consisting of: a reading light, a gasper air device, buttons or the like, which another unit are separated from the emergency oxygen unit.

17. A fuselage of an aircraft comprising a passenger cabin, associated therewith the storage device system according to one of the claims 1 to 15, in particular wherein a system of an emergency oxygen unit and another unit of the passenger service unit is provided and the emergency oxygen unit is separated from the another unit of the passenger service unit (PSU), in particular wherein the another unit of the passenger service unit is selected from the group consisting of: a reading light, a gasper air device, buttons or the like, which another unit is separated from the emergency oxygen unit.
